# EUROPÄISCHE PATENTSCHRIFT

(11) **EP 2 856 436 B1**
(45) Veröffentlichungstag und Bekanntmachung des Hinweises auf die Patenterteilung: **09.03.2016**
(21) Anmeldenummer: 13721259.3
(22) Anmeldetag: 26.04.2013
(51) Int. Cl.: G07C 9/00, B60R 25/00

(54) **FERNBEDIENUNGSVORRICHTUNG FÜR EINEN KRAFTWAGEN SOWIE VERFAHREN ZUM BETREIBEN EINER SOLCHEN FERNBEDIENUNGSVORRICHTUNG**
REMOTE CONTROL DEVICE FOR A MOTOR VEHICLE, AND METHOD FOR OPERATING SUCH A REMOTE CONTROL DEVICE
DISPOSITIF DE TÉLÉCOMMANDE POUR UN VÉHICULE À MOTEUR, ET PROCÉDÉ POUR FAIRE FONCTIONNER UN DISPOSITIF DE TÉLÉCOMMANDE DE CE TYPE

(30) Priorität: 26.05.2012 DE 102012010564
(43) Veröffentlichungstag der Anmeldung: 08.04.2015
(73) Patentinhaber: AUDI AG, 85045 Ingolstadt (DE)
(72) Erfinder: HARTMANN, Jürgen, 91468 Gutenstetten (Pahres) (DE); SASSMANNSHAUSEN, Patrick, 85113 Böhnfeld (DE); STÜBER, Andreas, 85122 Hofstetten (DE)
(74) Vertreter: Brandt, Kai
(86) Internationale Anmeldenummer: PCT/EP2013/001260
(87) Internationale Veröffentlichungsnummer: WO 2013/178314

(56) Entgegenhaltungen:
- DE-A1- 2 805 896
- DE-A1- 19 855 605
- DE-A1-102009 052 079

## Beschreibung

Die Erfindung betrifft eine Fernbedienungsvorrichtung für einen Kraftwagen gemäß dem Oberbegriff des Patentanspruchs 1 sowie ein Verfahren zum Betreiben einer solchen Fernbedienungsvorrichtung gemäß dem Oberbegriff des Patentanspruchs 7.

Eine solche Fernbedienungsvorrichtung sowie ein solches Verfahren zum Betreiben einer Fernbedienungsvorrichtung sind der WO 01/57345 A1 als bekannt zu entnehmen. Die Fernbedienungsvorrichtung wird dort als Fernsteuerungseinheit bezeichnet und ermöglicht es, Komponenten in Form von beweglichen Teilen eines Kraftwagens fernzubedienen. Bei diesen beweglichten Teilen handelt es sich vorliegend um Seitenscheiben des Kraftwagens.

Zum Fernbedienen der beweglichen Teile umfasst die Fernbedienungsvorrichtung eine als Sendereinheit bezeichnet Sendeeinrichtung zum Aussenden wenigstens eines Signals, mittels welchem die Komponenten fernbedient werden. Die Fernbedienungsvorrichtung umfasst zudem wenigstens einen Schalter, mittels welchem durch Betätigen des Schalters das Aussenden des Signals bewirkbar ist. Mit anderen Worten, wird der Schalter betätigt, d. h. vorliegend geschlossen, so wird das Signal ausgesendet.

Des Weiteren offenbart die DE 10 2004 043 012 A1 ein Verfahren und eine Vorrichtung zur Verhinderung einer Fehlaktivierung mindestens einer Funktion eines Kraftfahrzeugs über vorbestimmte Funkimpulse, wobei die Aktivierung verhindert wird, wenn sich ein Schlüssel, welcher gleichzeitig ein Sender der vorbestimmten Funkimpulse ist, weniger als eine vorbestimmte Entfernung entfernt von einem dem Schlüssel zugeordneten Schloss befindet.

Des Weiteren sind aus der DE 44 02 853 C1 und aus der DE 20 2011 033 155 U1 Handsender zur Fernbedienung bekannt, wobei durch den Handsender ein Code zur fernbedienten Betätigung zumindest einer Schließanlage eines Kraftwagens ausgesendet werden kann. Der Handsender umfasst auch einen Normalschlüssel sowie ein Gehäuse, mit welchem der Normalschlüssel relativ zum Gehäuse beweglich verbunden ist. Der Normalschlüssel dient zum mechanischen Betätigen der Schließanlage sowie eines Zündschlosses des Kraftwagens. Der Handsender weist darüber hinaus eine Sensorik zum Detektieren der Stellung des Normalschlüssels auf, wobei ein Aussenden des Codes des Handsenders zur fernbedienten Betätigung zumindest der Schließanlage in Abhängigkeit der von der Sensorik festgestellten Stellung oder Bewegung des Normalschlüssels von einer Stellung in die andere Stellung erfolgt.

Der DE 600 22 187 T2 ist ein tragbares Kraftfahrzeuglokalisierungssystem als bekannt zu entnehmen, welches einen ersten Sender/Empfänger auf einer tragbaren Vorrichtung umfasst. Die Vorrichtung besitzt einen Identifizierungscode, der von einem zweiten Sender/Empfänger in einem Kraftfahrzeug erkannt wird. Die Vorrichtung dient dazu, ein Signal an den zweiten Sender/Empfänger zu senden, der sich in dem Kraftfahrzeug befindet und so arbeitet, dass, wenn besagte tragbare Vorrichtung durch einen Winkelbereich hindurchbewegt wird, der Spitzenwert des vom zweiten Sender/Empfänger empfangenen Signals erkannt wird, während er durch besagten Bereich hindurchbewegt wird. Dabei ist vorgesehen, dass die besagte tragbare Vorrichtung so arbeitet, dass, wenn die Vorrichtung durch besagten Winkelbereich hindurch zurückbewegt wird und wenn der Spitzenwert wieder erkannt wird, ein Signal ausgelöst wird, um der tragbaren Vorrichtung eine Angabe der Richtung des Kraftfahrzeugs zur Vorrichtung anzuzeigen.

Ferner offenbart die EP 1 933 282 A1 einen Schlüssel mit einem Schlüsselbart und einem Gehäuse, an welchem der Schlüsselbart relativ zu dem Gehäuse verschwenkbar gehalten ist. Der Schlüsselbart ist mit einem Betätigungselement verbunden, welches mit dem Schlüsselbart mitverschwenkbar ist. An dem Gehäuse sind ferner zwei Schalter angeordnet, welche wahlweise je nach Drehrichtung des Schlüssels bei in ein korrespondierendes Schloss eingestecktem Schlüsselbart mittels des Betätigungselements betätigbar sind.

Wird der Schlüssel mit seinem Schlüsselbart in das korrespondierende Schloss eingeführt und in eine erste Drehrichtung über das Gehäuse gedreht, so wird der Schlüsselbart und mit diesem das Betätigungselement relativ zum Gehäuse verschwenkt, sodass ein erster der Schalter betätigt wird. Wird der Schlüsselbart über das Gehäuse in eine demgegenüber entgegengesetzte Drehrichtung gedreht, so erfolgt eine entsprechende Verschwenkung des Schlüsselbarts und mit diesem des Betätigungselements relativ zum Gehäuse, sodass der zweite Schalter betätigt wird. Weiterhin ist aus der DE 38 40 643 A1 ein Fernbedienungsgeber bekannt, dessen Gebergehäuse Senderelemente zur Abstrahlung von an einer Eingabevorrichtung des Gebers ausgewählten Steuerbefehle mittels in einem Signalwandler des Gebers gebildeter Übertragungssignale enthält. Dabei ist vorgesehen, dass die Eingabevorrichtung eine an das Gebergehäuse gekoppelte Lagedifferenzschalteranordnung ist, die bei einer Winkellageabweichung des Gebergehäuses von einer bestimmten momentanen Referenzlage des Gebergehäuses über einen bestimmten Winkelbetrag hinaus ein die Richtung der Winkellageabweichung kennzeichnendes Ausgangssignal als dem Signalwandler zuführbarem Steuerbefehl erzeugt.

Die DE 198 55 605 A1 offenbart einen Handsender zum Fernsteuern von Betriebsfunktionen, insbesondere Kraftfahrzeugfunktionen, mit einer Steuereinrichtung zum Steuern des Aussendens von mindestens zwei unterschiedlichen Steuersignalen zur Fernsteuerung der Betriebsfunktionen. Dabei ist es vorgesehen, dass ein interner, eine physikalische Größe erfassender Sensor vorhanden ist, dessen Sensorzustand in Abhängigkeit von der erfassten Größe geändert wird und der mit der Steuereinrichtung verbunden ist. Die Steuereinrichtung ist derart ausgebildet, dass sie das auszusendende Steuersignal in Abhängigkeit von dem Sensorzustand festlegt.

Ferner ist der DE 28 05 896 A1 ein Handsender für durch drahtlos übermittelte Signale fernbetätigte Garagentoreinrichtungen oder dergleichen mit einer Signalerzeugungseinrichtung, einer Energiequelle und einem in das Endergehäuse eingebauten, handbetätigbaren Sendeschalter, insbesondere in Gestalt eines Drucktasters, als bekannt zu entnehmen. Dabei ist es vorgesehen, dass in ortsfester Verbindung zu dem Gehäuse ein hinsichtlich der Gravitationskraft lageabhängiger Schalter angeordnet ist.

Schließlich ist aus der DE 10 2009 052 079 A1 eine tragbare Fernbedienungsvorrichtung für ein Fahrzeug bekannt. Die Fernbedienungsvorrichtung umfasst einen Beschleunigungssensor zum Erfassen einer Bewegung der Fernbedienungsvorrichtung und zum Ausgeben von entsprechenden Beschleunigungsdaten. Ferner ist eine Konvertierungseinrichtung zum Umwandeln der Beschleunigungsdaten in eine Bewegungskurve und/oder Rotation der Vorrichtung vorgesehen. Die Fernbedienungsvorrichtung umfasst ferner eine Auswerteeinrichtung zum Analysieren der Bewegungskurve und/oder Rotation, um daraus einen Steuerbefehl abzuleiten. Schließlich ist eine Schalteinrichtung vorgesehen, die dafür ausgelegt ist, ansprechend auf eine Betätigung eines Benutzers den Beginn und/oder das Ende der Erfassung einer Bewegung der Fernbedienungsvorrichtung festzulegen.

Es hat sich gezeigt, dass eine Verhinderung eines unerwünschten Fernbedienens der wenigstens einen Komponente des Kraftwagens verbesserungswürdig ist, da diese Verhinderung der Bedienung der Komponente bislang nur auf eine solche Weise realisiert ist, dass der Betätigungskomfort der Fernbedienungsvorrichtung beeinträchtigt wird.

Es ist daher Aufgabe der vorliegenden Erfindung, eine Fernbedienungsvorrichtung für einen Kraftwagen sowie ein Verfahren zum Betreiben einer solchen Fernbedienungsvorrichtung der eingangs genannten Art derart weiterzuentwickeln, dass ein besonders hoher Betätigungskomfort der Fernbedienungsvorrichtung bei gleichzeitiger Realisierung einer sicheren Verhinderung eines unerwünschten Fernbedienens der wenigstens einen Komponente des Kraftwagens ermöglicht ist.

Diese Aufgabe wird durch eine Fernbedienungsvorrichtung mit den Merkmalen des Patentanspruchs 1 sowie durch ein Verfahren mit den Merkmalen des Patentanspruchs 7 gelöst. Vorteilhafte Ausgestaltungen mit zweckmäßigen und nicht-trivialen Weiterbildungen der Erfindung sind in den übrigen Ansprüchen angegeben.

Der erste Aspekt der Erfindung betrifft eine Fernbedienungsvorrichtung für einen Kraftwagen, mit einer Sendeeinrichtung. Mittels der Sendeeinrichtung ist zum Fernbedienen wenigstens einer Komponente des Kraftwagens zumindest ein Signal aussendbar. Die Fernbedienungsvorrichtung umfasst ferner wenigstens einen Schalter, mittels welchem das Aussenden des Signals durch die Sendeeinrichtung bewirkbar ist. Dazu ist der Schalter beispielsweise manuell durch eine Person wenigstens mittelbar zu betätigen.

Es ist eine Lageerfassungseinrichtung der Fernbedienungsvorrichtung vorgesehen. Mittels der Lageerfassungseinrichtung ist eine Ist-Lage der Fernbedienungsvorrichtung relativ zu einer vorgebbaren Referenzlage der Fernbedienungsvorrichtung erfassbar, wobei das Signal in Abhängigkeit von der erfassten Ist-Lage mittels der Sendeeinrichtung bei betätigen des Schalters aussendbar ist. Dadurch ist eine durch das Aussenden des Signals bewirkbare bzw. herbeiführbare Funktion der Komponente in Abhängigkeit von der erfassten Ist-Lage bei Betätigen des Schalters bewirkbar.

Die Fernbedienungsvorrichtung ist in Abhängigkeit von der erfassten Ist-Lage in wenigstens zwei voneinander unterschiedlichen Betriebsmodi betreibbar. Vorzugsweise ist in jedem der Betriebsmodi jeweils wenigstens ein Signal zum Fernbedienen einer Komponente des Kraftwagens aussendbar. Somit kann die erfindungsgemäße Fernbedienungsvorrichtung in beiden Betriebsmodi verwendet werden, um eine entsprechende Komponente des Kraftwagens fernzubedienen, d. h. anzusteuern, sodass wenigstens eine Funktion der entsprechenden Komponente zu starten oder zu beenden ist. Dadurch ist eine sehr hohe Verfügbarkeit der Funktionalität der Fernbedienungsvorrichtung geschaffen, was mit einem sehr hohen Betätigungskomfort einhergeht. Gleichzeitig kann eine Fehlauslösung, d. h. eine Fehlbedienung sicher verhindert werden.

Erfindungsgemäß unterscheiden sich die Betriebsmodi hinsichtlich der Art voneinander, in der der Schalter zu betätigen ist, um das Aussenden des Signals zu bewirken und/oder eine entsprechende Funktion der Komponente zu bewirken. Mit anderen Worten ist der Schalter im ersten Betriebsmodus auf andere Art und Weise zu betätigen als im zweiten Betriebsmodus, um das Aussenden des Signals oder eines jeweiligen, dem jeweiligen Betriebsmodus zugeordneten Signals und/oder die Funktion der Komponente zu bewirken. Dadurch ist es insbesondere möglich, ein unerwünschtes Fernbedienen der Komponente infolge eines unerwünschten Betätigens des Schalters sicher zu vermeiden.

Zum einen ist bei der erfindungsgemäßen Fernbedienungsvorrichtung ein unerwünschtes Fernbedienen der Komponente sicher verhinderbar, da das Signal bei entsprechender Ist-Lage der Fernbedienungsvorrichtung beispielsweise nicht oder beispielsweise lediglich bei Erfülltsein wenigstens einer weiteren Voraussetzung gesendet wird oder da das Signal bei entsprechender Ist-Lage zwar ausgesendet wird jedoch die Funktion der Komponente nicht oder nur bei Erfülltsein wenigstens einer weiteren Voraussetzung bewirkt wird. Mit anderen Worten ist es z. B. möglich, eine Reaktion der Fernbedienungsvorrichtung und/oder der Komponente auf ein Betätigen des Schalters bei entsprechender Ist-Lage einzustellen oder zu modifizieren.

Zum anderen führt dies zu einem sehr hohen Betätigungskomfort der Fernbedienungsvorrichtung, da eine die Fernbedienungsvorrichtung nutzende Person die Fernbedienungsvorrichtung lediglich auf einfache Weise in ihrer Ist-Lage zu verändern hat, um ein entsprechendes Verhalten bzw. eine entsprechende Reaktion auf das Betätigen des Schalters zu bewirken. Ferner kann somit eine sehr hohe Verfügbarkeit der Funktion der Fernbedienungsvorrichtung und/oder der Komponente dargestellt werden.

Die erfindungsgemäße Fernbedienungsvorrichtung ermöglicht vorzugsweise ein drahtloses, d.h. berührungsloses Fernbedienen der Komponente. Dazu handelt es sich bei dem Signal beispielsweise um elektromagnetische Wellen, insbesondere um Funkwellen oder Infrarotstrahlen. Insbesondere das Aussenden von elektromagnetischen Wellen, insbesondere Funkwellen, ermöglicht ein leitungsloses Fernbedienen der Komponente aus einer relativ großen Distanz der Fernbedienungsvorrichtung zum beispielsweise als Personenkraftwagen ausgebildeten Kraftwagen.

Bei einer vorteilhaften Ausführungsform der Erfindung unterscheiden sich die Betriebsmodi hinsichtlich des mittels der Sendeeinrichtung auszusendenden Signals voneinander. Dies bedeutet, dass im ersten Betriebsmodus ein erstes Signal und im zweiten Betriebsmodus ein zweites Signal ausgesendet wird bzw. aussendbar ist, wobei die Signale voneinander unterschiedlich sind. Dabei sind die Signale beispielsweise hinsichtlich ihrer Art voneinander unterschiedlich. Alternativ oder zusätzlich können die Signale hinsichtlich ihres Inhalts, d. h. hinsichtlich ihrer Daten bzw. Botschaften an die Komponente des Kraftwagens voneinander unterschiedlich sein, sodass dadurch z. B. unterschiedliche Funktionen bzw. Reaktionen der Komponente infolge des Aussendens des entsprechenden Signals bewirkbar sind. Daraus resultiert eine sehr hohe Funktionalität der Fernbedienungsvorrichtung.

Als weiterhin vorteilhaft hat es sich gezeigt, wenn sich die Betriebsmodi hinsichtlich der fernbedienbaren Komponente des Kraftwagens voneinander unterscheiden. Dies bedeutet beispielsweise, dass im ersten Betriebsmodus eine erste Komponente des Kraftwagens fernbedienbar ist, während im zweiten Betriebsmodus eine von der ersten Komponente unterschiedliche, zweite Komponente des Kraftwagens mittels der Fernbedienungsvorrichtung fernbedienbar ist. Auch dies kommt einer sehr hohen Funktionalität der erfindungsgemäßen Verbindungsvorrichtung zugute.

Weiterhin kann zur Realisierung eines sehr hohen Betätigungskomforts infolge eines sehr hohen Funktionsumfangs vorgesehen sein, dass in beiden Betriebsmodi zwar die gleiche Komponente des Kraftwagens ansteuerbar ist, sich jedoch die Betriebsmodi hinsichtlich einer jeweiligen, von der Komponente infolge des Fernbedienens durchzuführenden Funktion voneinander unterscheiden.

Um die Arten, in denen der Schalter in den einzelnen Betriebsmodi zu betätigen ist, deutlich voneinander zu unterscheiden und abzugrenzen, ist beispielsweise vorgesehen, dass die Art eine Betätigungsdauer des Schalters ist, wobei der Schalter im ersten Betriebsmodus eine kürzere Betätigungsdauer zu betätigen ist als im zweiten Betriebsmodus Alternativ oder zusätzlich ist es möglich, dass die Art, in der der Schalter zu betätigen ist, um das Aussenden und/oder die Funktion der Komponente zu bewirken, d.h. die Komponente zum Ausführen ihrer Funktion zu veranlassen, eine Betätigungshäufigkeit des Schalters ist, wobei der Schalter im ersten Betriebsmodus weniger oft zu betätigen ist als im zweiten Betriebsmodus, um das jeweilige Aussenden bzw. die Funktion zu bewirken.

Der Schalter, welcher beispielsweise über einen Drückknopf oder ein anderweitiges Betätigungselement der Fernbedienungsvorrichtung betätigbar ist, ist somit im zweiten Betriebsmodus vorzugsweise über eine vorgebbare Zeitspanne häufiger zu betätigen als im ersten Betriebsmodus, um das Aussenden bzw. die Funktion zu bewirken.

Befindet sich die Fernbedienungsvorrichtung beispielsweise in einer Hosentasche des Fahrers des Kraftwagens und somit in einer im Vergleich zur Horizontalen sehr schrägen Ist-Lage, so ist die Fernbedienungsvorrichtung beispielsweise im zweiten Betriebsmodus betätigbar. Der Schalter ist dann häufiger und/oder eine längere Zeitdauer zu betätigen als im ersten Betriebsmodus, um die Komponente infolge des Aussendens des Signals zu veranlassen, ihre Funktion durchzuführen.

Bei der Komponente handelt es sich beispielsweise um eine Schließanlage zum Verriegeln von Türen und/oder Klappen des Kraftwagens. Wird das Signal ausgesendet, so kann wird die Schließanlage verriegelt oder entriegelt.

Ist die Schließanlage verriegelt, die Fernbedienungsvorrichtung in ihrem zweiten Betriebsmodus betreibbar und befindet sich die Fernbedienungsvorrichtung in der Hosentasche, so führt eine nur einmalige und/oder sehr kurze Betätigung des Schalters nicht zum Entriegeln der Schließanlage, sodass ein Fehlentriegelung vermieden ist. Der Schalter muss dann eine längere Zeitdauer, beispielsweise zwei Sekunden und/oder innerhalb von zwei Sekunden mehrmals, zum Beispiel zweimal, gedrückt werden, um die Schließanlage zu entriegeln.

Befindet sich die Fernbedienungsvorrichtung in einer Hand des Fahrers und in einer im Vergleich zur Horizontalen weniger schrägen Ist-Lage, so ist die Fernbedienungsvorrichtung im ersten Betriebsmodus betreibbar, sodass zum Entriegeln der Schließanlage der Schalter weniger häufig und/oder eine kürzere Zeitdauer als im zweiten Betriebsmodus zu betätigen, insbesondere zu drücken, ist.

Jedoch ist die Entriegelung der Schließanlage auch dann möglich, wenn sich die Fernbedienungsvorrichtung in der Hand des Fahrers befindet, dieser die Fernbedienungsvorrichtung jedoch sehr schräg hält, sodass sie im zweiten Betriebsmodus betreibbar ist. In diesem Fall steht die Funktion, die Schließanlage zu entriegeln, dem Fahrer dennoch zur Verfügung. Hierzu ist es lediglich erforderlich, dass der Fahrer den Schalter, insbesondere den Drückknopf länger und/oder häufiger betätigt als im ersten Betriebsmodus.

Die Funktion, die Schließanlage zu betätigen, ist somit in beiden Betriebsmodi bereitgestellt und für den Fahrer verfügbar, was zu einem sehr hohen Betätigungskomfort führt.

Der zweite Aspekt der Erfindung betrifft ein Verfahren zum Betreiben einer Fernbedienungsvorrichtung für einen Kraftwagen, insbesondere einen Personenkraftwagen, bei welchem zum Fernbedienen wenigstens einer Komponente des Kraftwagens mittels einer Sendeeinrichtung der Fernbedienungsvorrichtung zumindest ein Signal ausgesendet wird, wobei das Aussenden des Signals durch Betätigen wenigstens eines Schalters der Fernbedienungsvorrichtung bewirkt wird.

Es ist vorgesehen, dass eine Ist-Lage der Fernbedienungsvorrichtung relativ zu einer Referenzlage mittels einer Lageerfassungseinrichtung der Fernbedienungsvorrichtung erfasst wird, wobei das Signal in Abhängigkeit von der erfassten Ist-Lage mittels der Sendeeinrichtung bei Betätigen des Schalters ausgesendet wird. Die Fernbedienungsvorrichtung wird dabei in Abhängigkeit von der erfassten Ist-Lage in wenigstens zwei voneinander unterschiedlichen Betriebsmodi betrieben. Erfindungsgemäß ist es vorgesehen, dass sich die Betriebsmodi hinsichtlich der Art voneinander unterscheiden, in der der Schalter zu betätigen ist, um das Aussenden des Signals oder eine Funktion der Komponente in Folge des Aussendens zu bewirken. Vorteilhafte Ausgestaltungen des ersten Aspekts der Erfindung sind als vorteilhafte Ausgestaltungen des zweiten Aspekts der Erfindung anzusehen und umgekehrt. Das erfindungsgemäße Verfahren ermöglicht einerseits eine sichere Verhinderung einer unerwünschten Fehlbedienung der Komponente. Andererseits ermöglicht das Verfahren einen sehr hohen Bedienkomfort der Fernbedienungsvorrichtung, da das Aussenden des Signals in Abhängigkeit von der erfassten Ist-Lage erfolgt und die Ist-Lage auf einfache und komfortable Weise durch einen Nutzer der Fernbedienungsvorrichtung verändert werden kann.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Zeichnung zeigt in:
- Fig. 1: eine schematische Perspektivansicht einer Fernbedienungsvorrichtung für einen Kraftwagen, welche eine Sendeeinrichtung zum Aussenden von Signalen umfasst, wobei die Signale in Abhängigkeit von einer Ist-Lage relativ zu einer Referenzlage der Fernbedienungsvorrichtung aussendbar sind;
- Fig. 2: eine Prinzipdarstellung zur Veranschaulichung eines Verfahrens zum Betreiben der Fernbedienungsvorrichtung gemäß Fig. 1.

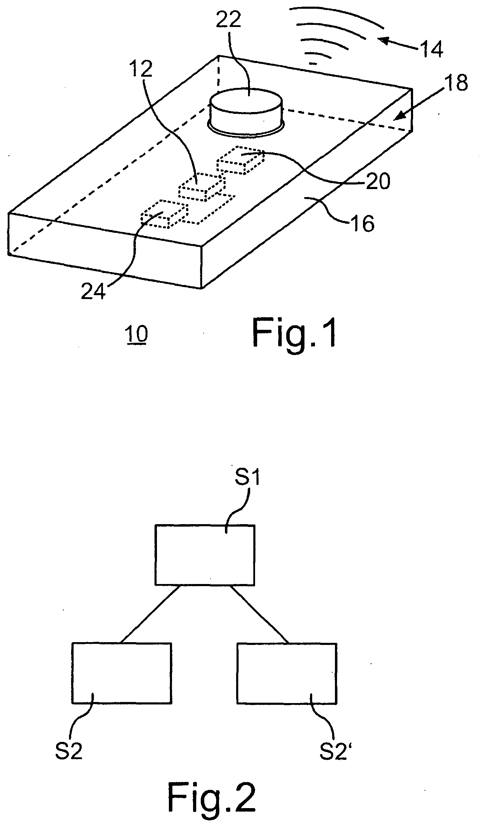

Fig. 1 zeigt eine Fernbedienungsvorrichtung 10 für einen Kraftwagen. Die Fernbedienungsvorrichtung 10 ist beispielsweise ein Fernbedienungsschlüssel, insbesondere ein Funkschlüssel, des Kraftwagens, mittels welchem eine Komponente in Form einer Schließanlage des Kraftwagens fernbedienbar ist. Dazu umfasst die Fernbedienungsvorrichtung 10 eine Sendeeinrichtung 12, mittels welcher schematisch dargestellte Signale 14 auszusenden sind. Bei den Signalen 14 handelt es sich beispielsweise um elektromagnetische Wellen, insbesondere Funkwellen, welche von einer Empfangseinrichtung des Kraftwagens zu empfangen sind. Dadurch kann die Schließanlage, welche mit der Empfangseinrichtung gekoppelt ist, infolge des Empfangens der Signale 14 leitungslos entriegelt und verriegelt werden, sodass Türen und/oder Klappen des Kraftwagens geöffnet werden können oder gegen ein Öffnen gesichert sind.

Die Sendeeinrichtung 12 ist dabei an einem Gehäuse 16 der Fernbedienungsvorrichtung 10 angeordnet, wobei durch das Gehäuse 16 ein Aufnahmeraum 18 begrenzt ist. Die Sendeeinrichtung 12 ist in dem Aufnahmeraum 18 aufgenommen.

Die Fernbedienungsvorrichtung 10 umfasst ferner einen Schalter 20, welcher in dem Aufnahmeraum 18 aufgenommen ist und welcher über ein Betätigungselement, vorliegend in Form eines Drückknopfes 22 betätigbar ist. Mittels des Schalters 20 ist durch Betätigen des Schalters 20 über den Drückknopf 22 das Aussenden der Signale 14 bewirkbar. Dazu wird der Drückknopf 22 betätigt, d. h. gedrückt, wodurch der Schalter 20 geschlossen wird. Wird das Drücken des Drückknopfes 22 beendet, so bewegt sich dieser beispielsweise unter Federkraftbeaufschlagung mittels wenigstens eines Federelements zurück in eine Ausgangslage, sodass der Schalter 20 geöffnet und das Betätigen des Schalters 20 beendet wird.

Die Fernbedienungsvorrichtung 10 umfasst auch eine Lageerfassungseinrichtung 24, welche in dem Aufnahmeraum 18 aufgenommen ist und mittels welcher eine Ist-Lage der Fernbedienungsvorrichtung relativ zu einer vorgebbaren Referenzlage, beispielsweise relativ zur Horizontalen, erfassbar ist. Die Signale 14 sind dabei in Abhängigkeit von der erfassten Ist-Lage auszusenden. Dies bedeutet vorliegend, dass durch die Signale 14 wenigstens eine die Ist-Lage charakterisierende Information, d.h. Daten, an die Empfangseinrichtung übermittelt werden. Dadurch wird der Empfangseinrichtung die Ist-Lage der Fernbedienungsvorrichtung mitgeteilt, sodass in der Folge die Funktion der Schließanlage, d.h. das Verriegeln oder Entriegeln in Abhängigkeit von der Ist-Lage bewirkt und durchgeführt wird.

Anhand von Fig. 2 ist das Aussenden der Signale 14 bei Erfülltsein von vorgebbaren Kriterien geschildert. In einem ersten Schritt S1 eines Verfahrens zum Betreiben der Fernbedienungsvorrichtung 10 wird mittels der Lageerfassungseinrichtung 24 die Ist-Lage erfasst, wobei eine Neigung der Fernbedienungsvorrichtung 10 relativ zur Horizontalen erfasst wird. Befindet sich die Ist-Lage der Fernbedienungsvorrichtung 10, d. h. ihre Neigung gegenüber der Horizontalen in einem ersten Winkelbereich, so wird die Fernbedienungseinrichtung 10 in einem zweiten Schritt S2 in einem ersten Betriebsmodus betrieben.

Befindet sich die Ist-Lage, d. h. die Neigung in einem vom ersten Winkelbereich unterschiedlichen, zweiten Winkelbereich, so wird die Fernbedienungsvorrichtung 10 in einem sich an den ersten Schritt S1 anschließenden, dritten Schritt S2' in einen vom ersten Betriebsmodus unterschiedlichen, zweiten Betriebsmodus betrieben. Mit anderen Worten wird je nachdem, in welchem Winkelbereich, d. h. wie schräg die Fernbedienungsvorrichtung 10 relativ zur Horizontalen gehalten wird oder ausgerichtet ist, die Fernbedienungsvorrichtung 10 in einem der Betriebsmodi Betrieben. Die Anzahl der Betriebsmodi und somit die Anzahl der voneinander unterschiedlichen Winkelbereichen kann auch höher, d. h. wenigstens drei sein. In jedem der Betriebsmodi kann dabei eine andere Funktion einer Schließanlage oder einer anderweitigen Komponente des Kraftwagens durch Betätigen des Drückknopfes 22 herbeigeführt werden und/oder eine andere Bedienlogik des Drückknopfes 22 vorgesehen sein.

Vorliegend unterscheiden sich die Betriebsmodi hinsichtlich der Bedienlogik des Drückknopfes 22. Mit anderen Worten unterscheiden sich die Betriebsmodi in der Art, in der der Schalter 20 über den Drückknopf 22 zu betätigen ist, um die Funktion der Schließanlage zu bewirken, d.h. diese zu entriegeln und zu verriegeln.

Wird die Fernbedienungsvorrichtung 10, welche beispielsweise ein Schlüssel des Kraftwagens ist, zumindest im Wesentlichen waagrecht oder in einem sehr kleinen Winkelbereich um die Waagrechte (Horizontale) gehalten, so wird der erste Betriebsmodus eingestellt. Im ersten Betriebsmodus genügt ein kurzer Druck des Drückknopfs 22 und somit ein kurzzeitiges, einmaliges Schließen des Schalters 20, um die Schließanlage zu entriegeln oder zu verriegeln. Bei einem solchen Drücken des Drückknopfes 22 werden die Signale 14 und mittels diesen die Information über die Ist-Lage an die Empfangseinrichtung gesendet. Diese erkennt oder ermittelt, dass die Fernbedienungsvorrichtung 10 im ersten Betriebsmodus zu betreiben ist, in dem ein eimaliges Drücken des Drückknopfes 22 ausreicht, um die Schließanlage zu betätigen.

Wird die Fernbedienungsvorrichtung 10 demgegenüber schräger gehalten, so wird der zweite Betriebsmodus eingestellt. Im zweiten Betriebsmodus muss der Schalter 20 über den Drückknopf 22 eine längere Zeitdauer als im ersten Betriebsmodus und/oder innerhalb einer vorgebbaren Zeitdauer häufiger als im ersten Betriebsmodus, beispielsweise zweimal, geschlossen werden, um dadurch die Schließanlage zu entriegeln oder verriegeln. Bei dieser Zeitdauer handelt es sich beispielsweise um zwei Sekunden.

Beim entsprechenden, zweimaligen und/oder langen Drücken des Drückknopfes 22 werden die Signale 14 und mittels diesen die Information über die Ist-Lage an die Empfangseinrichtung gesendet. Diese erkennt oder ermittelt, dass die Fernbedienungsvorrichtung 10 im zweiten Betriebsmodus zu betreiben ist, in dem ein zweimaliges und/oder längeres Drücken des Drückknopfes 22 ausreicht, um die Schließanlage zu betätigen.

Wird die Fernbedienungsvorrichtung 10 derart schräg gehalten, sodass sie im zweiten Betriebsmodus betrieben wird, und wird der Drückknopf 22 dann nur einmalig innerhalb von zwei Sekunden gedrückt, so werden die Signale 14 an die Empfangseinrichtung übermittelt. Die Empfangseinrichtung erkennt jedoch, dass die Fernbedienungsvorrichtung 10 im zweiten Betriebsmodus zu betrieben ist, in welchem ein solches Drücken des Drückknopfes 22 (Betätigen des Schalters 20) nicht ausreicht, um die Schließanlage zu betätigen.

Durch diese gegenüber dem ersten Betriebsmodus veränderte Bedienlogik im zweiten Betriebsmodus kann eine unbeabsichtigte Betätigung der Schließanlage vermieden werden. So wird eine Fehlbedienung vermieden, wenn sich die Fernbedienungsrichtung 10 beispielsweise in einer Hosentasche befindet.

## Patentansprüche

1. Fernbedienungsvorrichtung (10) für einen Kraftwagen, mit einer Sendeeinrichtung (12), mittels welcher zum Fernbedienen wenigstens einer Komponente des Kraftwagens zumindest ein Signal (14) auszusenden ist, mit wenigstens einem Schalter (20), mittels welchem durch Betätigen des Schalters (20) das Aussenden des Signals (14) bewirkbar ist, und mit einer Lageerfassungseinrichtung (24), mittels welcher eine Ist-Lage der Fernbedienungsvorrichtung (10) relativ zu einer vorgebbaren Referenzlage erfassbar ist, wobei das Signal (14) in Abhängigkeit von der erfassten Ist-Lage auszusenden ist, und wobei die Fernbedienungsvorrichtung (10) in Abhängigkeit von der erfassten Ist-Lage in wenigstens zwei voneinander unterschiedlichen Betriebsmodi betreibbar ist,
**dadurch gekennzeichnet, dass**
sich die Betriebsmodi hinsichtlich der Art voneinander unterscheiden, in der der Schalter (20) zu betätigen ist, um das Aussenden des Signals (14) oder eine Funktion der Komponente infolge des Aussendens zu bewirken.

2. Fernbedienungsvorrichtung (10) nach Anspruch 1,
**dadurch gekennzeichnet, dass**
sich die Betriebsmodi hinsichtlich des mittels der Sendeeinrichtung auszusenden Signals (14) voneinander unterscheiden.

3. Fernbedienungsvorrichtung (10) nach einem der Ansprüche 1 oder 2,
**dadurch gekennzeichnet, dass**
sich die Betriebsmodi hinsichtlich der fernbedienbaren Komponente des Kraftwagens voneinander unterscheiden.

4. Fernbedienungsvorrichtung (10) nach einem der Ansprüche 1 bis 3,
**dadurch gekennzeichnet, dass**
sich die Betriebsmodi hinsichtlich einer jeweiligen, von der Komponente infolge des Fernbedienens durchzuführenden Funktion voneinander unterscheiden.

5. Fernbedienungsvorrichtung (10) nach einem der vorhergehenden Ansprüche,
**dadurch gekennzeichnet, dass**
die Art, in der der Schalter (20) zu betätigen ist, um das Aussenden oder die Funktion der Komponente infolge des Aussendens zu bewirken, eine Betätigungsdauer des Schalters (20) ist, wobei der Schalter im ersten Betriebsmodus eine kürzere Betätigungsdauer zu betätigen ist als im zweiten Betriebsmodus, um das jeweilige Aussenden und/oder die Funktion zu bewirken.

6. Fernbedienungsvorrichtung (10) nach einem der vorhergehenden Ansprüche,
**dadurch gekennzeichnet, dass**
die Art, in der der Schalter zu betätigen ist, um das Aussenden oder die Funktion der Komponente infolge des Aussendens zu bewirken, eine Betätigungshäufigkeit des Schalters (20) ist, wobei der Schalter (20) im ersten Betriebsmodus weniger oft zu betätigen ist als im zweiten Betriebsmodus, um das jeweilige Aussenden und/oder die Funktion zu bewirken.

7. Verfahren zum Betreiben einer Fernbedienungsvorrichtung (10) für einen Kraftwagen, bei welchem zum Fernbedienen wenigstens einer Komponente des Kraftwagens mittels einer Sendeeinrichtung (12) der Fernbedienungsvorrichtung (10) zumindest ein Signal (14) ausgesendet wird, wobei das Aussenden des Signals (14) durch Betätigen wenigstens eines Schalters (20) der Fernbedienungsvorrichtung (10) bewirkt wird, wobei eine Ist-Lage der Fernbedienungsvorrichtung (10) relativ zu einer Referenzlage mittels einer Lageerfassungseinrichtung (24) der Fernbedienungsvorrichtung (10) erfasst wird, wobei das Signal (14) in Abhängigkeit von der erfassten Ist-Lage mittels der Sendeeinrichtung (12) bei Betätigen des Schalters (20) ausgesendet wird und wobei die Fernbedienungsvorrichtung (10) in Abhängigkeit von der erfassten Ist-Lage in wenigstens zwei voneinander unterschiedlichen Betriebsmodi betrieben wird,
**dadurch gekennzeichnet, dass**
sich die Betriebsmodi hinsichtlich der Art voneinander unterscheiden, in der der Schalter (20) zu betätigen ist, um das Aussenden des Signals (14) oder eine Funktion der Komponente infolge des Aussendens zu bewirken.

## Claims

1. Remote control device (10) for a motor vehicle with an emitter device (12) by means of which for remotely controlling at least one component of the motor vehicle at least one signal (14) is to be emitted, with at least one switch (20) by means of which through operation of the switch (20) the emission of the signal (14) can be brought about, and with a position-recording device (24) by means of which an actual position of the remote control device (10) relative to a pre-definable reference position can be determined, wherein the signal (14) is to be emitted in dependence on the recorded actual position, and wherein the remote control device (10) can be operated in at least two different operating modes depending on the recorded actual position,
**characterised in that**
the operating modes differ from each other in term of the way in which the switch (20) is to be operated in order to emit the signal (14) or to bring about a function of the components as a result of the emission.

2. Remote control device (10) according to claim 1,
**characterised in that**
the operating modes differ from each other in terms of the signal (14) to be emitted by means of the emitter device.

3. Remove control device (10) according to one of claims 1 or 2
**characterised in that**
the operating modes differ from each other in terms of the remotely controllable components of the vehicle.

4. Remote control device (10) according to any one of claims 1 to 3
**characterised in that**
the operating modes differ from each other in terms of the function to be performed by the component as a result of the remote controlling in each case.

5. Remote control device (10) according to any one of the preceding claims
**characterised in that**
the way in which the switch (20) is to be operated in order to bring about emission or functioning of the components as a result of the emission is a duration of operating the switch (20), wherein in the first operating mode the switch is operated for a shorter operating duration that in a second operating mode in order to bring about the emission and/or the function respectively.

6. Remote control device (10) according to any one of the preceding claims
**characterised in that**
the way in which the switch is to be operated in order to bring about the emission or functioning of the components as a result of the emission is an operating frequency of the switch (20), wherein in the first operating mode the switch (20) is operated less frequently than in the second operating mode in order to bring about the emission and/or the functioning respectively.

7. Method of operating a remote control device (10) for a motor vehicle in which for the remote controlling of at least one component of the motor vehicle by means of an emitter device (12) of the remote control device (10) at least one signal is emitted, wherein emission of the signal (14) is brought about by operating at least one switch (20) of the remote control device (10), wherein an actual position of the remote control device (10) relative to a reference position is determined by means of a position recording device (24) of the remote control device (10), wherein the signal (14) is emitted in dependence on the recorded actual position of the emitter device (12) by operating the switch (20) and wherein the remote control device (10) is operated in at least two different operating modes depending on the recorded actual position,
**characterised in that**
the operating modes differ from each other in terms of the way in which the switch (20) is to be operated in order to emit the signal (14) or to bring about a function of the component as a result of the emission.

## Revendications

1. Dispositif de télécommande (10) pour un véhicule automobile, avec un dispositif émetteur (12) au moyen duquel au moins un signal (14) doit être émis pour la télécommande d'au moins un composant du véhicule automobile, avec au moins un interrupteur (20) au moyen duquel l'émission du signal (14) peut être activée par l'actionnement de l'interrupteur (20) et avec un dispositif détecteur de position (24) au moyen duquel une position réelle du dispositif de télécommande (10) par rapport à une position de référence pouvant être prescrite peut être détectée, le signal (14) étant à émettre en fonction de la position réelle détectée et le dispositif de télécommande (10) pouvant être utilisé dans au moins deux modes de fonctionnement différents l'un de l'autre en fonction de la position réelle détectée,
**caractérisé en ce que** les modes de fonctionnement se distinguent l'un de l'autre par la manière dont l'interrupteur (20) doit être actionné pour activer l'émission du signal (14) ou une fonction du composant suite à l'émission.

2. Dispositif de télécommande (10) selon la revendication 1, **caractérisé en ce que** les modes de fonctionnement se distinguent l'un de l'autre par le signal (14) à émettre au moyen du dispositif émetteur.

3. Dispositif de télécommande (10) selon l'une des revendications 1 ou 2, **caractérisé en ce que** les modes de fonctionnement se distinguent l'un de l'autre par le composant pouvant être télécommandé du véhicule automobile.

4. Dispositif de télécommande (10) selon l'une des revendications 1 à 3, **caractérisé en ce que** les modes de fonctionnement se distinguent l'un de l'autre par une fonction respective à réaliser par le composant suite à la télécommande.

5. Dispositif de télécommande (10) selon l'une des revendications précédentes, **caractérisé en ce que** la manière dont doit être actionné l'interrupteur (20) pour activer l'émission ou la fonction du composant suite à l'émission est une durée d'actionnement de l'interrupteur (20), l'interrupteur dans le premier mode de fonctionnement devant être actionné pendant une durée d'actionnement plus courte que dans le deuxième mode de fonctionnement pour activer l'émission et/ou la fonction respective.

6. Dispositif de télécommande (10) selon l'une des revendications précédentes, **caractérisé en ce que** la manière dont doit être actionné l'interrupteur (20) pour activer l'émission ou la fonction du composant suite à l'émission est une fréquence d'actionnement de l'interrupteur (20), l'interrupteur dans le premier mode de fonctionnement devant être actionné moins souvent que dans le deuxième mode de fonctionnement pour activer l'émission et/ou la fonction respective.

7. Procédé de fonctionnement d'un dispositif de télécommande (10) pour un véhicule automobile, selon lequel au moins un signal (14) est émis au moyen d'un dispositif émetteur (12) du dispositif de télécommande (10) pour la télécommande d'au moins un composant du véhicule automobile, l'émission du signal (14) étant activée par l'actionnement d'au moins un interrupteur (20) du dispositif de télécommande (10), une position réelle du dispositif de télécommande (10) par rapport à une position de référence étant détectée au moyen d'un dispositif détecteur de position (24) du dispositif de télécommande (10), le signal (14) étant émis au moyen du dispositif émetteur (12) lors de l'actionnement de l'interrupteur (20) en fonction de la position réelle détectée et le dispositif de télécommande (10) étant utilisé dans au moins deux modes de fonctionnement différents l'un de l'autre en fonction de la position réelle détectée,
**caractérisé en ce que** les modes de fonctionnement se distinguent l'un de l'autre par la manière dont l'interrupteur (20) doit être actionné pour activer l'émission du signal (14) ou une fonction du composant suite à l'émission.
